# EUROPEAN PATENT APPLICATION

(11) **EP 2 760 119 A1**
(43) Date of publication of application: **30.07.2014**
(21) Application number: 11872714.8
(22) Date of filing: 22.09.2011
(51) Int. Cl.: H02M 5/293

(54) **ELECTRIC APPARATUS**

(71) Applicant: Toshiba Lighting & Technology Corporation, Yokosuka-shi, Kanagawa 237-8510 (JP)
(72) Inventor: TAKAHASHI, Yuji, Yokosuka-shi Kanagawa 237-8510 (JP); KITAMURA, Noriyuki, Yokosuka-shi Kanagawa 237-8510 (JP)
(74) Representative: Bokinge, Ole
(86) International application number: PCT/JP2011/071726
(87) International publication number: WO 2013/042266

(57) **Abstract**

Electrical equipment includes a switching power source, a rectifier circuit, a pair of capacitative elements, and a load. The switching power source outputs an alternating-current voltage with input of a direct-current or an alternating-current power source voltage. The pair of capacitative elements are connected between the switching power source and the rectifier circuit and insulate the switching power source and the rectifier circuit. The load is connected as a load circuit to an output of the rectifier circuit and driven by a constant current.

## Description

### [Technical Field]

Embodiments of the invention relate to electrical equipment.

### [Background Art]

Switching power sources using switching elements are used for a wide range of application as direct-current or alternating-current power sources. As an example, the sources are also used as lighting power sources. That is, these days, in lighting devices (electrical equipment), lighting light sources are being replaced from incandescent lamps and fluorescent lamps by power-saving and long-life light sources including light-emitting diodes (LEDs), for example. Further, new lighting light sources including EL (Electro-Luminescence) and organic light-emitting diode (OLED) are developed.

The brightness of these lighting light sources depends on flowing current values, and power source circuits for supplying constant currents are necessary for turning on lightings. Further, voltages are necessary to be converted for matching input power source voltages with rated voltages of lighting light sources such as LEDs. As high-efficiency power sources suitable for power saving and downsizing, switching power sources including DC-DC converters are known. Furthermore, safety may be secured for electric shock by insulation between the commercial power source side and the load side within the power source circuits, and the insulation properties may be degraded due to aged deterioration.

### [Citation List]

### [Patent Literature]

[PTL 1] Japanese Patent No. 4499040

### [Summary]

### [Technical Problem]

An object of the embodiments of the invention is to provide electrical equipment that secures safety for degradation of insulation properties between a power source side and a load side.

### [Solution to Problem]

A lighting device according to an aspect of the invention includes a switching power source, a rectifier circuit, a pair of capacitative elements, and a load. The switching power source outputs an alternating-current voltage with input of a direct-current or an alternating-current power source voltage. The pair of capacitative elements are connected between the switching power source and the rectifier circuit and insulate the switching power source and the rectifier circuit. The load is connected as a load circuit to an output of the rectifier circuit and driven by a constant current.

### [Brief Description of Drawings]

FIG. 1 is a block diagram illustrating a lighting device according to a first example.
FIG. 2 is a characteristic diagram illustrating output voltage VOUT and output current IOUT supplied to a lighting load.
FIG. 3 is a circuit diagram illustrating a lighting device according to a second example.
FIG. 4 is a circuit diagram illustrating a lighting device according to a third example.

### [Description of Embodiments]

(First Embodiment) Electrical equipment of the first embodiment has a switching power source that outputs an alternating-current voltage with input of a direct-current or an alternating-current power source voltage, a rectifier circuit, a pair of capacitative elements that are connected between the switching power source and the rectifier circuit and insulate the switching power source and the rectifier circuit, and a load that is connected as a load circuit to an output of the rectifier circuit and driven by a constant current.

(Second Embodiment) The electrical equipment of the second embodiment is characterized in the electrical equipment of the first embodiment by including a protection circuit that detects degradation of insulation performance of at least one element of the pair of capacitative elements and stops an operation of the switching power source.

(Third Embodiment) The electrical equipment of the third embodiment is characterized in the electrical equipment of the second embodiment in that the protection circuit has a detection circuit that detects at least one of an output current and an output voltage of the switching power source.

(Fourth Embodiment) The electrical equipment of the fourth embodiment is characterized in the electrical equipment of the second embodiment in that the protection circuit has a first detection coil connected between an output of the switching power source and one of the pair of capacitative elements, a second detection coil magnetically coupled to the first detection coil, and a comparator circuit that rectifies a voltage inducted in the second detection coil and compares the voltage with a reference voltage.

(Fifth Embodiment) The electrical equipment of the fifth embodiment is characterized in the electrical equipment of the first embodiment in that the switching power source is a DC-AC converter that converts the input direct-current power source voltage to an alternating-current voltage.

(Sixth Embodiment) The electrical equipment of the sixth embodiment is characterized in the electrical equipment of the first embodiment in that the switching power source is an AC-AC converter that converts the input alternating-current power source voltage to another alternating-current voltage.

(Seventh Embodiment) The electrical equipment of the seventh embodiment is characterized in the electrical equipment of the first embodiment in that each of the pair of capacitative elements has a plurality of series-connected capacitors.

(Eighth Embodiment) The electrical equipment of the eighth embodiment is characterized in the electrical equipment of the second embodiment in that the switching power source has a resonance coil, a resonance capacitor that is parallel-connected to the resonance coil to form a resonance circuit, a switching element connected to the resonance coil and the resonance capacitor, and a current control element that is series-connected to the switching element and turns off the switching element when a current of the switching element exceeds a predetermined upper limit, and the protection circuit turns off the current control element and stops an operation of the switching power source.

Hereinafter, examples will be explained in detail with reference to the drawings. Note that, in the specification of this application and the respective drawings, the same elements as those previously described with reference to the previously mentioned drawings have the same signs and their detailed explanation will be appropriately omitted.

First, a first example will be explained.

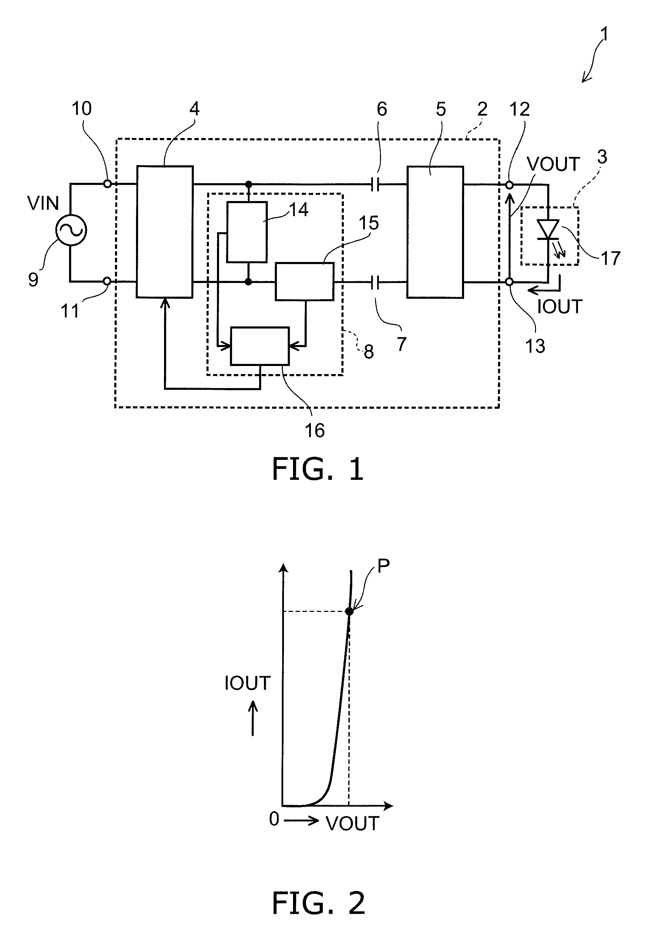

FIG. 1 is a block diagram illustrating a lighting device according to the first example.

As shown in FIG. 1, a lighting device 1 includes a power source unit 2 that outputs an output voltage VOUT with input of a power source voltage VIN, and a lighting load (load) 3 as a load circuit of the power source unit 2. The lighting load 3 has a lighting light source 17. The lighting light source 17 includes an LED, for example, and turns on when the output voltage VOUT is supplied from the power source unit 2. The lighting device 1 is connected to an alternating-current power source 9 such as a commercial power source and used, for example.

The power source unit 2 includes a switching power source 4 that outputs an alternating-current voltage, a rectifier circuit 5 that converts an alternating-current voltage into a direct-current voltage, a pair of capacitative elements 6, 7 that insulate between the switching power source 4 and the rectifier circuit 5, and a protection circuit 8. The power source unit 2 is an insulated power source unit in which the power source side and the load side are insulated.

The switching power source 4 is connected to the alternating-current power source 9 via a pair of power source terminals 10, 11. The switching power source 4 generates an alternating-current voltage by switching operation in which a switching element (not shown) supplied with a power source voltage VIN repeats on and off and outputs the voltage, for example. The switching power source 4 is controlled so that the average current flowing in the LED may take nearly a constant value, for example. As a result, the lighting light source 17 of the lighting load 3 may be stably lighted. Note that the alternating-current power source 9 is a commercial power source having a power source voltage VIN of 100 to 240 V, for example.

The rectifier circuit 5 converts the alternating-current voltage output from the switching power source 4 via the pair of capacitative elements 6, 7 into a direct-current voltage and outputs the voltage between a pair of output terminals 12, 13 as the output voltage VOUT. Note that the rectifier circuit 5 includes a diode, for example, and may further have a low-pass filter.

The pair of capacitative elements 6, 7 are connected between the switching power source 4 and the rectifier circuit 5 and insulate between the switching power source 4 and the rectifier circuit 5, i.e., between the power source side and the load side. The respective capacitative elements 6, 7 are capacitors, for example. Note that the capacitance of the respective capacitative elements 6, 7 may be made equal, for example.

The protection circuit 8 has a voltage detection circuit (detection circuit) 14 that detects the voltage output from the switching power source 4, a current detection circuit (detection circuit) 15 that detects the current output from the switching power source 4, and a control circuit 16. The voltage detection circuit 14 is parallel-connected to the output of the switching power source 4. The current detection circuit 15 is series-connected to the output of the switching power source 4. The control circuit 16 compares the voltage detected by the voltage detection circuit 14 with a specified voltage and compares the current detected by the current detection circuit 15 with a specified current to detect degradation of insulation properties of at least one element of the pair of capacitative elements 6, 7.

For example, a load impedance of the switching power source 4 when the insulation properties of at least one element of the pair of capacitative elements 6, 7 is degraded, i.e., the impedance in the path of the capacitative element 6, the rectifier circuit 5, the lighting load 3, the rectifier circuit 5, and the capacitative element 7 is lower than that when the insulation properties of the respective capacitative elements 6, 7 are not degraded. As a result, the output current IOUT flowing in the lighting load 3 is larger than that when the insulation properties of the respective capacitative elements 6, 7 are not degraded.

Further, in the case where the lighting light source 17 is a lighting light source with the lower operation resistance like an LED, for example, the output voltage VOUT is nearly constant even when the output current IOUT increases near a rated operation point P as shown in Fig. 2, for example. As a result, the voltage output from the switching power source 4 when the insulation properties of at least one element of the pair of capacitative elements 6, 7 are degraded is lower than that when the insulation properties of the respective capacitative elements 6, 7 are not degraded.

Therefore, a value larger than the current output from the switching power source 4 when the insulation properties of the pair of capacitative elements 6, 7 are not degraded, i.e., under the normal condition and equal to or smaller than the acceptable maximum current may be set as the specified current. Further, a value lower than the voltage output from the switching power source 4 under the normal condition and equal to or larger than the voltage supplied to the rectifier circuit 5 may be set as the specified voltage. The control circuit 16 may detect the degradation of the insulation properties of at least one element of the pair of capacitative elements 6, 7 by comparing the voltage detected by the voltage detection circuit 14 and the current detected by the current detection circuit 15 with the specified voltage and the specified current, respectively.

For example, when the detected current is equal to or larger than the specified current, the degradation of the insulation properties of at least one element of the pair of capacitative elements 6, 7 is detected. Further, for example, when the detected voltage is equal to or smaller than the specified voltage, the degradation of the insulation properties of at least one element of the pair of capacitative elements 6, 7 is detected.

As described above, in the example, the voltage detected by the voltage detection circuit 14 is compared with the specified voltage and the current detected by the current detection circuit 15 is compared with the specified current, and thereby, the degradation of the insulation properties of at least one element of the pair of capacitative elements 6, 7 is detected and the switching operation of the switching power source 4 is stopped. As a result, the lighting load 3 is turned off and the risk such as electric shock due to the degradation of the insulation properties between the power source side and the load side may be avoided.

Further, in the example, when the lighting light source 17 is an LED or the like, for example, the current flowing in the lighting light source 17 may be controlled by frequency control of the switching power source 4 at the power source side. As a result, the brightness of the lighting light source 17 may be adjusted without providing the current detection circuit, for example, at the load side.

Note that, in FIG. 1, the configuration in which the protection circuit 8 has the voltage detection circuit 14 and the current detection circuit 15 is illustrated. However, the protection circuit 8 may have one detection circuit of the voltage detection circuit 14 and the current detection circuit 15.

Next, a second example will be explained.

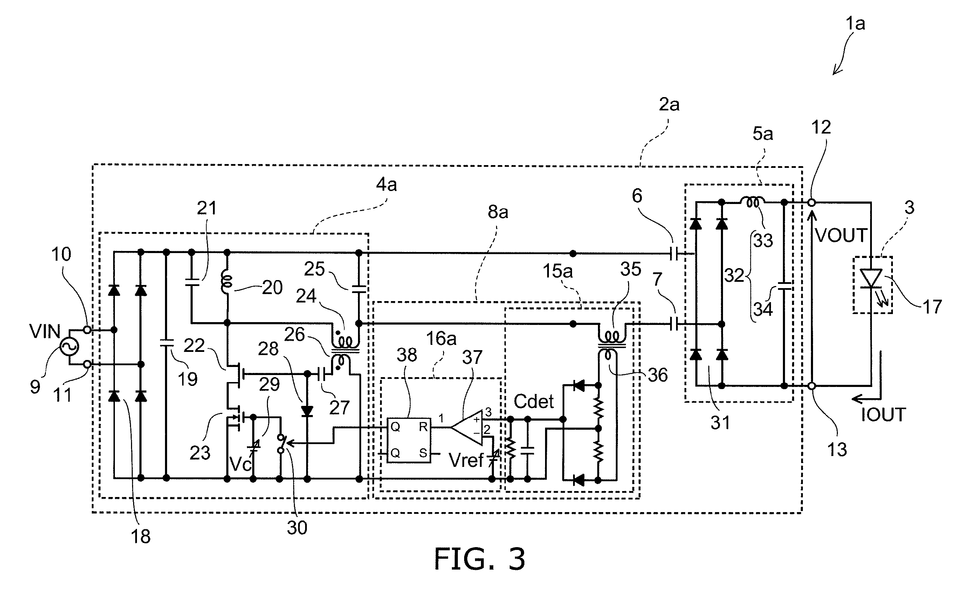

FIG. 3 is a circuit diagram illustrating a lighting device according to the second example.

As shown in FIG. 3, a lighting device 1a has a different configuration of the power source unit 2 compared to the lighting device 1 according to the first example. That is, in the example, a power source unit 2a is provided in place of the power source unit 2 in the first example. The rest of the configuration except the power source unit of the lighting device according to the example is the same as the configuration shown in FIG. 1.

The power source unit 2a is different from the power source unit 2 in the first example in the configuration of the protection circuit 8 and in the illustration of the configuration of the switching power source 4 and the rectifier circuit 5. That is, in the example, the power source unit 2a has a switching power source 4a, a rectifier circuit 5a, the pair of capacitative elements 6, 7, and a protection circuit 8a.

The switching power source 4a is divided into a rectifying unit that converts an alternating current of the power source voltage VIN into a direct-current voltage and a DC-AC conversion unit that converts a direct-current voltage into an alternating-current voltage. The rectifying unit has a diode bridge 18 and a smoothing capacitor 19. Further, the DC-AC conversion unit has a parallel-resonance DC-AC converter and a low-pass filter. The DC-AC conversion unit has a resonance coil 20, a resonance capacitor 21, a switching element 22, a current control element 23, a first coil 24, a capacitor 25, a second coil 26, a coupling capacitor 27, a protection diode 28, a voltage source circuit 29, a stop switch 30.

The diode bridge 18 inputs the power source voltage VIN of the alternating-current power source 9 via the pair of power source terminals 10, 11. The smoothing capacitor 19 is connected to the output of the diode bridge 18, and smoothes the voltage rectified by the diode bridge 18 and outputs a direct-current voltage.

One end of the resonance coil 20 and one end of the resonance capacitor 21 are connected to one end of the smoothing capacitor 19. The other end of the resonance coil 20 and the other end of the resonance capacitor 21 are connected to each other and further connected to the other end of the smoothing capacitor 19 via the switching element 22 and the current control element 23. The resonance coil 20 and the resonance capacitor 21 form a parallel resonance circuit.

Each of the switching element 22 and the current control element 23 has a first main terminal, a second main terminal, and a control terminal. The first main terminal of the switching element 22 is connected to the other end of the resonance capacitor 21 with the other end of the resonance coil 20. The second main terminal of the switching element 22 is connected to the first main terminal of the current control element 23. The second main terminal of the current control element 23 is connected to the other end of the smoothing capacitor 19. That is, the switching element 22 and the current control element 23 are series-connected.

Note that the switching element 22 is a normally-on element and the current control element 23 is a normally-off element. The switching element 22 and the current control element 23 are field-effect transistors (FETs), for example, high electron mobility transistors (HEMTs). Further, the first main terminal, the second main terminal, and the control terminal are a drain, a source, a gate, respectively, for example.

One end of the first coil 24 is connected to the other end of the resonance coil 20, the other end of the resonance capacitor 21, and the first main terminal of the switching element 22, and the other end of the first coil 24 is connected to the one end of the resonance coil 20 and the one end of the resonance capacitor 21 via the capacitor 25. Note that a cutoff frequency specified by the inductance of the first coil 24 and the capacitance of the capacitor 25 is set to be substantially lower than the resonance frequency of the resonance circuit formed by the resonance coil 20 and the resonance capacitor 21. As a result, the first coil 24 and the capacitor 25 form a low-pass filter having sufficient attenuation at the resonance frequency of the resonance circuit formed by the resonance coil 20 and the resonance capacitor 21.

The second coil 26 is provided to be magnetically coupled to the first coil 24. One end of the second coil 26 is connected to the control terminal of the switching element 22 via the coupling capacitor 27 and the other end of the second coil 26 is connected to the other end of the smoothing capacitor 19. Note that the second coil 26 is connected so that a positive voltage may be supplied to the side of the control terminal of the switching element 22 at a phase at which a current increasing from the one end to the other end of the first coil 24 flows. Further, the protection diode 28 is connected between the control terminal of the switching element 22 and the other end of the smoothing capacitor 19.

The voltage source circuit 29 is connected between the control terminal of the current control element 23 and the other end of the smoothing capacitor 19, and outputs a constant voltage Vc. Further, the stop switch 30 is connected between the control terminal of the current control element 23 and the other end of the smoothing capacitor 19 in parallel to the voltage source circuit 29. The stop switch 30 is switched to on or off according to the output of the protection circuit 8a.

The rectifier circuit 5a has a diode bridge 31 to which an alternating-current voltage is input from the switching power source 4a via the pair of capacitative elements 6, 7 and a low-pass filter 32 that smoothes a voltage output from the diode bridge 31 and outputs the voltage as an output voltage VOUT. The low-pass filter 32 includes a coil 33 and a capacitor 34 and a cutoff frequency specified by the inductance of the coil 33 and the capacitance of the capacitor 34 is set to be substantially lower than the resonance frequency of the resonance circuit formed by the resonance coil 20 and the resonance capacitor 21.

The ends of the capacitor 34 are connected to the pair of output terminals 12, 13. The voltage output from the low-pass filter 32 of the rectifier circuit 5a is output to the lighting load 3 as the output voltage VOUT of the power source unit 2a.

The protection circuit 8a has a current detection circuit (detection circuit) 15a that detects a current output from the switching power source 4a and a control circuit 16a that allows or stops the operation of the switching power source 4a.

The current detection circuit 15a has a first detection coil 35, a second detection coil 36, etc. The first detection coil 35 is connected between the output of the switching power source 4a and the capacitative element 7. The second detection coil 36 is provided to be magnetically coupled to the first detection coil 35. The second detection coil 36 is connected to a rectifier circuit having a diode etc. The current detection circuit 15a outputs a detection voltage Cdet in proportion to the current flowing in the first detection coil 35, i.e., the current output from the switching power source 4a.

The control circuit 16a includes a comparator circuit 37 that compares the detection voltage Cdet output from the current detection circuit 15a with a reference voltage Vref and a latch circuit 38. Here, the reference voltage Vref is set to be equal to the detection voltage Cdet output from the current detection circuit 15a when the current output from the switching power source 4a is a specified current, for example. As described above, the specified current takes a value larger than the current output from the switching power source 4 when the insulation properties of the pair of capacitative elements 6, 7 are not degraded, i.e., under the normal condition and equal to or smaller than the acceptable maximum current.

Next, an operation of the lighting device 1a will be explained.

When power is turned on, i.e., the alternating-current power source 9 is connected to the pair of power source terminals 10, 11, the smoothing capacitor 19 in the switching power source 4a is charged via the diode bridge 18, and the voltage between the ends of the smoothing capacitor 19 rises.

The switching element 22 is the normally-on element, and the switching element 22 is on when the power is turned on. The current control element 23 is the normally-off element, and the current control element 23 turns on after the power is turned on and the constant voltage Vc is supplied from the voltage source circuit 29. Therefore, when the power is turned on and the current control element 23 turns on, a current flows in the resonance coil 20 via the switching element 22 and the current control element 23. Note that the latch circuit 38 of the protection circuit 8a is set when the power is turned on and the circuit operation is started, and outputs an on-signal. As a result, the stop switch 30 turns off.

The voltage between the ends of the smoothing capacitor 19 is supplied to the resonance coil 20, and the current flowing in the resonance coil 20 increases. When the current flowing in the resonance coil 20 reaches a constant-current value (upper limit) of the current control element 23, the voltage between the ends of the current control element 23 sharply rises to turn the voltage of the control terminal of the switching element 22 negative with respect to the second main terminal of the switching element 22. As a result, the switching element 22 turns off.

When the switching element 22 turns off, a sine-wave resonance current flows in the resonance circuit formed by the resonance coil 20 and the resonance capacitor 21, and the current flowing in the resonance coil 20 decreases. As described above, when the current increasing from the one end to the other end of the first coil 24, i.e., from the resonance coil 20 side to the capacitor 25 side flows, the second coil 26 is connected so that the control terminal side of the switching element 22 may supply a positive voltage.

Further, a cutoff frequency of the low-pass filter formed by the first coil 24 and the capacitor 25 is set to be substantially lower than the resonance frequency. As a result, the impedance of the capacitor 25 is sufficiently smaller with respect to the resonance frequency, and a current at nearly the same phase as that of the resonance coil 20 flows in the first coil 24 via the capacitor 25.

Therefore, at the phase at which the resonance current flowing in the resonance coil 20 decreases, the polarity of the voltage induced in the second coil 26 is reversed and a negative voltage is supplied to the control terminal side of the switching element 22. As a result, the switching element 22 is held off.

At the phase at which the resonance current flowing in the resonance coil 20 increases, the polarity of the voltage induced in the second coil 26 is reversed again and a positive voltage is supplied to the control terminal side of the switching element 22. As a result, the switching element 22 turns on. Thereby, the state in which the voltage between the ends of the smoothing capacitor 19 is supplied to the ends of the resonance coil 20 is returned.

Subsequently, the above described operation is repeated. The switching between on and off of the switching element 22 is automatically repeated in synchronization with the resonance frequency of the resonance circuit, and the output of the low-pass filter, i.e., the voltage between the ends of the capacitor 25 is output as an alternating-current voltage from the switching power source 4a. Further, the alternating-current voltage output from the switching power source 4a rises until the voltage between the ends of the smoothing capacitor 19 rises and reaches the steady-state voltage.

Further, in the rectifier circuit 5a, the alternating-current voltage output from the switching power source 4a is input to the diode bridge 31 via the pair of capacitative elements 6, 7 and the first detection coil 35 of the protection circuit 8a. The voltage rectified in the diode bridge 31 charges the capacitor 34 via the coil 33. The voltage between the ends of the capacitor 34, i.e., the voltage between the pair of output terminals 12, 13 is supplied to the lighting light source 17 of the lighting load 3 as the output voltage VOUT of the rectifier circuit 5a and the power source unit 2a.

When the output voltage VOUT reaches a predetermined voltage, a current flows in the lighting light source 17 and the lighting light source 17 turns on. For example, when the lighting light source 17 is an LED, the predetermined voltage is a forward voltage of the LED and determined in response to the lighting light source 17.

In the protection circuit 8a, when the current output from the switching power source 4a is equal to or smaller than the specified current, the detection voltage Cdet output from the current detection circuit 15a is equal to or smaller than the reference voltage Vref. As a result, the comparator circuit 37 does not reset the latch circuit 38 and the latch circuit 38 holds the set status. Therefore, the control circuit 16a continues to output the on-signal to the stop switch 30 of the switching power source 4a and allows the operation of the switching power source 4a.

Further, when the current output from the switching power source 4a is larger than the specified current, the detection voltage Cdet output from the current detection circuit 15a is higher than the reference voltage Vref. As a result, the comparator circuit 37 resets the latch circuit 38. Therefore, the control circuit 16a outputs an off-signal to the stop switch 30 of the switching power source 4a and stops the operation of the switching power source 4a. Note that, after the latch circuit 38 is reset, even when the current output from the switching power source 4a decreases to be equal to or smaller than the specified current, the latch circuit 38 holds the reset status. As a result, for example, the latch circuit 38 outputs the on-signal to the stop switch 30 and the operation of the switching power source 4a is stopped until the power is turned on again.

Next, advantages of the example will be explained.

In the example, the current output from the switching power source 4a is detected by the current detection circuit 15a. Then, if the detected current is larger than the specified current, the condition that the degradation of the insulation properties of at least one element of the pair of capacitative elements 6, 7 is detected and the switching operation of the switching power source 4a is stopped. As a result, the lighting load 3 is turned off and the risk such as electric shock due to the degradation of the insulation properties between the power source side and the load side may be avoided.

Further, in the example, the potential of the control terminal of the current control element 23 series-connected to the switching element 22 is controlled and the current control element 23 is turned off, and thereby, the operation of the switching power source 4a is stopped. As a result, when the degradation of the insulation properties of at least one element of the pair of capacitative elements 6, 7 is detected, the operation of the switching power source 4a may be quickly stopped.

Furthermore, in the example, the power source side and the load side are insulated by the pair of capacitative elements 6, 7. As a result, reduction in size and weight may be realized compared to the case of insulation using a transformer.

In addition, in the case where HEMTs are used as the respective elements including the switching element 22 and current control element 23, a high-frequency operation is possible. For example, an operation on the order of megahertz is possible. Especially, in the case of using GaN HEMTs, further high-frequency operation is possible. As a result, the reduction in size and weight of the first to second detection coils may be further realized.

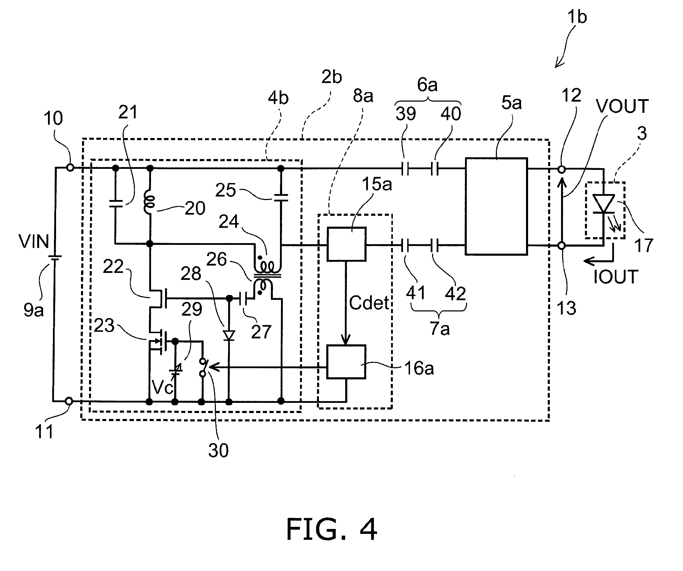

FIG. 4 is a circuit diagram illustrating a power source unit in a third example.

As shown in FIG. 4, a lighting device 1b is different from the lighting device 1a according to the second example in the configuration of the power source unit 2a. That is, in the example, a power source unit 2b is provided in place of the power source unit 2a in the second example. The rest of the configuration except the power source unit of the lighting device according to the example is the same as the configuration shown in FIG. 3.

The power source unit 2b is different from the power source unit 2a in the second example in the configuration of the switching power source 4a and the pair of capacitative elements 6, 7. That is, in the example, the power source unit 2b has a switching power source 4b, the rectifier circuit 5a, a pair of capacitative elements 6a, 7a, and the protection circuit 8a. The rest of the configuration except the switching power source 4b and the pair of capacitative elements 6a, 7a in the example is the same as the configuration shown in FIG. 3. Note that, in FiG. 4, the illustration of the configuration of the rectifier circuit 5a is omitted and the illustration of the configuration of the protection circuit 8a is simplified.

In comparison with the switching power source 4a in the second example, the switching power source 4b is different from the switching power source 4a in that there is no rectifying unit including the diode bridge 18 and the smoothing capacitor 19. That is, in the switching power source 4b, a direct-current power source 9a is connected to the pair of power source terminals 10, 11, and a power source voltage VIN is input thereto.

The switching power source 4b outputs an alternating-current voltage with input of the direct-current power source voltage VIN.

In comparison with the pair of capacitative elements 6, 7 in the second example, the pair of capacitative elements 6a, 7a are different in that the elements are formed by series-connected capacitative elements 39, 40 and series-connected capacitative elements 41, 42, respectively.

The capacitative elements 39 to 42 are capacitors, for example. Further, the capacitance of the respective capacitative elements 39 to 42 may be made equal.

The rest of the configuration of the power source unit 2b in the example except the above described configuration is the same as the configuration shown in FIG. 3.

In the example, the pair of capacitative elements 6a, 7a are formed by pluralities of capacitative elements, and thus, even when the insulation properties of one of the capacitative elements 39 to 42 are degraded, the insulation properties of the pair of capacitative elements 6a, 7a may be secured. However, when lighting of the lighting load 3a is continued, there is the risk such as electric shock due to the degradation of the insulation properties of the pair of capacitative elements 6a, 7a.

Accordingly, in the example, by setting of the reference voltage of the control circuit 16a in the protection circuit 8a, the degradation of the insulation properties of one element of the capacitative elements 39 to 42 may be detected and the operation of the switching power source 4b may be stopped. As a result, the lighting load 3 turns off and the risk such as electric shock due to the degradation of the insulation properties between the power source side and the load side may be avoided.

The other advantages of the third example are the same as those of the second example.

The examples of the invention are explained with reference to the specific examples. However, the invention is not limited to the examples and various modifications may be made.

For example, in the above described second and third examples, the example in which the switching element 22 is the normally-on element is shown, however, the element may be a normally-off element. In this case, an activation circuit for activation of the switching power sources 4a, 4b when supply of the power source voltage VIN is started is necessary.

Further, the configuration of the switching power source is not limited to the configurations shown in FIGS. 3 and 4. For example, the configuration may be a bridge circuit including a switching element. In this case, for example, the operation of the switching power source may be stopped by control of the voltage supplied to the control terminal of the switching element.

Furthermore, the switching element 22 and the current control element 23 are not limited to the GaN HEMTs. For example, the elements may be semiconductor elements formed using semiconductors having wide band gaps (wide-band-gap semiconductors) such as silicon carbide (SiC), gallium nitride (GaN), or diamond on semiconductor substrates. Here, the wide-band-gap semiconductor refers to a semiconductor having a wider band gap than gallium arsenide (GaAs) having a band gap of about 1.4 eV. For example, the wide-band-gap semiconductor refers to a semiconductor having a band gap equal to or more than 1.5 eV including gallium phosphide (GaP, having a band gap of about 2.3 eV), gallium nitride (GaN, having a band gap of about 3.4 eV), diamond (C, having a band gap of about 5.27 eV), aluminum nitride (AlN, having a band gap of about 5.9 eV), and silicon carbide (SiC). In comparison with silicon (Si) semiconductor elements, the wide-band-gap semiconductors have the smaller parasitic capacitance and can perform high-speed operation when the element withstand voltage is made equal, and reduction in size and reduction in switching loss of the switching power source may be realized.

Further, the current control element 23 may be a constant-current diode, for example. In this case, the switching power source may be stopped by control of the voltage supplied to the control terminal of the switching element 22.

Furthermore, the lighting light source 17 is not limited to the LED, but may be an EL or an OLED, and a plurality of the lighting light sources 17 may be series- or parallel-connected to the lighting load 3.

In addition, in the above described first to third examples, the case where the lighting light source is used as the load of the switching power source is exemplified, however, the exemplified switching power source may be used not only for the lighting light source but also for a load driven by a direct current.

Several embodiments and examples of the invention have been explained, however, these embodiments and examples are presented as examples and not intended to limit the scope of the invention. These new embodiments and examples may be implemented in other various forms, and various omission, replacement, changes may be made without departing from the scope of the invention. These embodiments or examples and modifications thereof are included in the scope of the invention and included in the invention described in claims and equivalent thereof.

## Claims

1. Electrical equipment comprising:
a switching power source that outputs an alternating-current voltage with input of a direct-current or an alternating-current power source voltage;
a rectifier circuit;
a pair of capacitative elements that are connected between the switching power source and the rectifier circuit and insulate the switching power source and the rectifier circuit; and
a load that is connected as a load circuit to an output of the rectifier circuit and driven by a constant current.

2. The equipment according to claim 1, further comprising a protection circuit that detects degradation of insulation performance of at least one element of the pair of capacitative elements and stops an operation of the switching power source.

3. The equipment according to claim 2, wherein the protection circuit includes a detection circuit that detects at least one of an output current and an output voltage of the switching power source.

4. The equipment according to claim 2, wherein
the protection circuit includes:
a first detection coil connected between an output of the switching power source and one of the pair of capacitative elements;
a second detection coil magnetically coupled to the first detection coil; and
a comparator circuit that rectifies a voltage inducted in the second detection coil and compares the voltage with a reference voltage.

5. The equipment according to claim 1, wherein the switching power source is a DC-AC converter that converts the input direct-current power source voltage to an alternating-current voltage.

6. The equipment according to claim 1, wherein the switching power source is an AC-AC converter that converts the input alternating-current power source voltage to another alternating-current voltage.

7. The equipment according to claim 1, wherein each of the pair of capacitative elements includes a plurality of series-connected capacitors.

8. The equipment according to claim 1, wherein
the switching power source includes:
a resonance coil;
a resonance capacitor that is parallel-connected to the resonance coil to form a resonance circuit;
a switching element connected to the resonance coil and the resonance capacitor; and
a current control element that is series-connected to the switching element and turns off the switching element when a current of the switching element exceeds a predetermined upper limit, and
the protection circuit turns off the current control element and stops an operation of the switching power source.
